# EUROPÄISCHE PATENTSCHRIFT

(11) **EP 2 352 654 B1**
(45) Veröffentlichungstag und Bekanntmachung des Hinweises auf die Patenterteilung: **12.10.2016**
(21) Anmeldenummer: 09777598.5
(22) Anmeldetag: 01.08.2009
(51) Int. Cl.: B60D 1/62, B60D 1/64

(54) **ANSCHLUSSANORDNUNG FÜR EIN ANHÄNGEFAHRZEUG UND ANHÄNGEFAHRZEUG**
CONNECTION ARRANGEMENT FOR A TRAILER VEHICLE AND TRAILER VEHICLE
AGENCEMENT DE RACCORDS POUR UN VÉHICULE TRACTÉ ET VÉHICULE TRACTÉ

(30) Priorität: 03.11.2008 DE 102008054365
(43) Veröffentlichungstag der Anmeldung: 10.08.2011
(73) Patentinhaber: WABCO GmbH, 30453 Hannover (DE)
(72) Erfinder: RISSE, Rainer, 30982 Pattensen-Reden (DE); RONNENBERG, Udo, 30900 Wedemark (DE); STENDER, Axel, 31787 Hameln (DE)
(74) Vertreter: Koschnitzki, Thomas
(86) Internationale Anmeldenummer: PCT/EP2009/005589
(87) Internationale Veröffentlichungsnummer: WO 2010/060492

(56) Entgegenhaltungen:
- WO-A-2008/038313
- DE-A1- 3 726 822
- US-A- 5 458 357

## Beschreibung

Die Erfindung betrifft eine Anschlussanordnung für ein Anhängefahrzeug, insbesondere für ein Anhängefahrzeug für Lastkraftwagen, sowie ein Anhängefahrzeug, das eine Anschlussanordnung umfasst.

Es ist bekannt, an Anhängefahrzeugen Anschlüsse vorzusehen, die die Versorgung des Anhängefahrzeuges oder die Steuerung verschiedener Komponenten des Anhängefahrzeuges über ein Zugfahrzeug ermöglichen. So weist beispielsweise ein Anhängefahrzeug für ein Lastkraftwagen einen ersten elektrischen Anschluss für die Steuerung und Versorgung eines Anhängefahrzeugbremssystems, einen zweiten elektrischen Anschluss für eine Beleuchtungsanlage des Anhängefahrzeuges, einen ersten pneumatischen Anschluss für eine Bremsleitung und einen zweiten pneumatischen Anschluss für eine Vorratsleitung des Anhängefahrzeuges auf, die mit dem jeweiligen Anschluss zugeordneten Anschlusskabeln oder Anschlussschläuchen des Zugfahrzeuges verbindbar sind. Die elektrischen Anschlüsse werden üblicherweise als Steckdose ausgebildet, die pneumatischen Anschlüsse als Kupplungsköpfe. Um ein Anhängefahrzeug mit den genannten Anschlüssen auszustatten, ist es bekannt, die Anschlüsse einzeln an einem zu einem Unterbau des Anhängefahrzeuges gehörenden Metallträger im Stirnbereich des Anhängefahrzeuges zu montieren.

WO 2008/038313 A1 offenbart eine Anordnung für ein Anhängerfahrzeug mit zwei pneumatischen Anschlüssen, wobei die Anordnung ein automatisches Ankuppeln zwischen einem Zugfahrzeug und einem Anhängefahrzeug ermöglicht.

Aufgabe der vorliegenden Erfindung ist es, eine Anschlussanordnung für ein Anhängefahrzeug zu schaffen, die eine unaufwendige Montage von verschiedenen unterschiedlichen Anschlüssen an ein Anhängefahrzeug ermöglicht. Eine weitere Aufgabe der Erfindung ist es, ein Anhängefahrzeug mit einer derartigen Anschlussanordnung zu schaffen.

Diese Aufgaben werden durch eine Anschlussanordnung und ein Anhängefahrzeug nach den unabhängigen Ansprüchen gelöst.

Vorteilhafte Weiterbildungen sind Gegenstände der abhängigen Ansprüche.

Die erfindungsgemäße Anschlussanordnung für ein Anhängefahrzeug umfasst mindestens zwei Anschlüsse der folgenden, für einen zugfahrzeugseitigen Anschluss geeigneten Anschlüsse: a) ein erster elektrischer Anschluss für ein Bremssystem, b) ein zweiter elektrischer Anschluss für eine Beleuchtungsanlage, c) ein erster pneumatischer Anschluss für eine Bremsleitung, d) ein zweiter pneumatischer Anschluss für eine Vorratsleitung, sowie ein Gehäuse, wobei die mindestens zwei Anschlüsse am Gehäuse montiert sind und/oder von dem Gehäuse zumindest teilweise ausgebildet werden.

Dadurch, dass mehrere unterschiedliche Anschlüsse am Gehäuse angeordnet sind und/oder von dem Gehäuse zumindest teilweise ausgebildet werden, bilden das Gehäuse und diese Anschlüsse eine bauliche Einheit. Anstatt einer Vielzahl von einzelnen Elementen kann eine verringerte Anzahl von Elementen oder sogar nur ein einzelnes Element für die Montage an einem Anhängefahrzeug erzielt werden. Auf diese Weise können mit geringem Montageaufwand mehrere Anschlüsse unterschiedlicher Art an einem Anhängefahrzeug montiert werden.

Das Gehäuse ist vorzugsweise für die Montage der Anschlüsse mit geeigneten Befestigungsmitteln wie Bohrungen oder Gewinde ausgebildet. Teile oder Komponenten der Anschlüsse, möglicherweise der gesamte Anschluss, können aber auch durch das Gehäuse selbst ausgebildet werden, beispielsweise an dem Gehäuse angeformt oder angespritzt sein. Letzteres ermöglicht es ebenfalls, Herstellungskosten zu reduzieren.

Die den einzelnen Anschlüssen zugeordneten elektrischen Leitungen und/oder pneumatischen Leitungen werden vorzugsweise von den Anschlüssen durch das Innere des Gehäuses geführt werden und dann über eine oder mehrere Durchführungen aus dem Gehäuse herausgeführt für die Verbindung mit Komponenten des Anhängers. Bevorzugt ist es, nur eine einzelne Durchführung vorzusehen, durch die alle Leitungen durchgeführt werden. Dies vereinfacht es, die Dichtigkeit des Gehäuses insbesondere gegenüber Eindringen von Feuchtigkeit zu gewährleisten. Des Weiteren kann auch der Aufwand einer Verkabelung der Leitungen im Anhängefahrzeug reduziert werden.

Anstatt einer Durchführung kann das Gehäuse einen oder mehrere Ausgangsanschlüsse für den anhängerfahrzeugseitigen Anschluss der Anschlussanordnung aufweisen. In diesem Falle wäre es nicht mehr notwendig, Leitungen aus dem Gehäuse herauszuführen. Anstatt dessen kann der Anschluss der anhängefahrzeugseitigen Komponenten über elektrische und/oder pneumatische Leitungen mit geeigneten Anschlussmitteln hergestellt werden.

Das erfindungsgemäße Anhängefahrzeug umfasst eine derartige Anschlussanordnung. Vorzugsweise ist eine solche Anschlussanordnung an einem Träger des Anhängefahrzeuges, beispielsweise ein Träger eines Anhängefahrzeugunterbaus, oder an einer Stirnwand des Anhängefahrzeugs angeordnet.

Die Erfindung wird im Folgenden anhand von Ausführungsbeispielen, die durch mehrere Figuren dargestellt sind, näher erläutert. Dabei zeigt:
- Fig. 1: eine schematische Ansicht einer Ausführungsform eines erfindungsgemäßen Anhängefahrzeuges mit einer ersten Ausführungsform einer erfindungsgemäßen Anschlussanordnung,
- Fig. 2: die erste Anschlussanordnung in Alleinstellung,
- Fig. 3: eine zweite Ausführungsform einer Anschlussanordnung und
- Fig. 4: eine dritte Ausführungsform einer Anschlussanordnung.

Gleiche oder einander entsprechende Bauteile sind in den Figuren mit denselben Bezugszeichen bezeichnet.

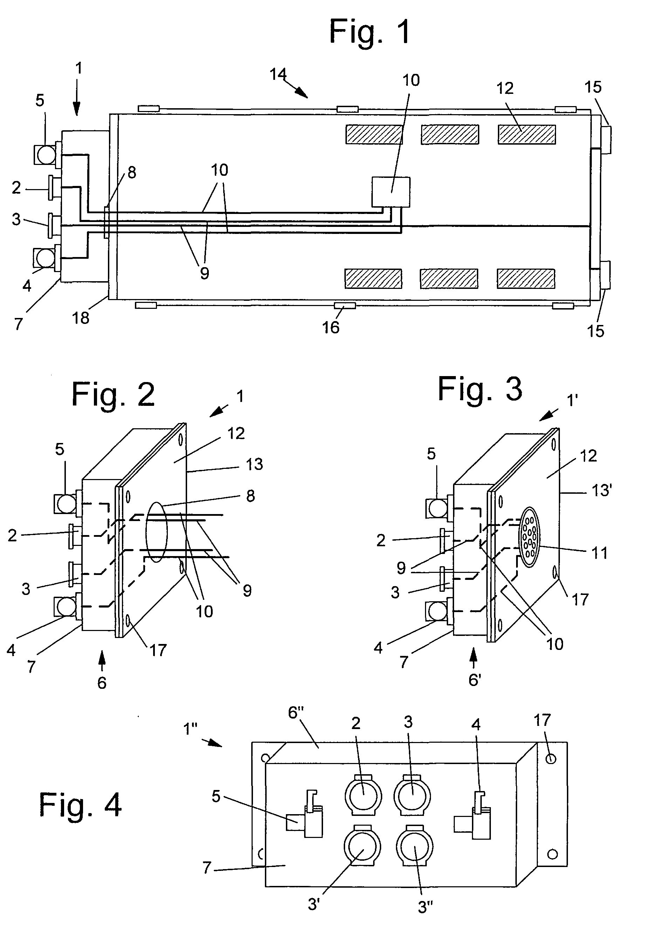

Die Fig. 1 zeigt eine Ausführungsform eines erfindungsgemäßen Anhängefahrzeuges 14 welches eine Anschlussanordnung 1 gemäß einer ersten Ausführungsform aufweist. Die Anschlussanordnung 1 in Alleinstellung in Fig. 2 gezeigt.

Die Anschlussanordnung 1 umfasst vier Anschlüsse: einen ersten elektrischen Anschluss 2 für ein elektronisches Bremssystem 10 des Anhängefahrzeuges 14, einen zweiten elektrischen Anschluss 3 für eine Beleuchtungsanlage des Anhängefahrzeuges, einen ersten pneumatischen Anschluss 4 für eine Bremsleitung und einen zweiten pneumatischen Anschluss 5 für eine Vorratsleitung für die Steuerung bzw. Versorgung des Bremssystems 10 mit Druckluft. Das Bremssystem 10 ist an sich bekannt und in Fig. 1 lediglich symbolisch angedeutet. Die Beleuchtungsanlage umfasst Rücklichter 15 und Seitenlichter 16. Die elektrischen Anschlüsse 2, 3 sind hier als Steckdosen gemäß der Norm ISO 7638 bzw. ISO 12098 ausgebildet. Die pneumatischen Anschlüsse 4, 5 sind als Kupplungsköpfe ausgebildet. Die Anschlüsse 2, 3, 4 und 4 sind für den Anschluss elektrischer und pneumatischer Leitungen eines Zugfahrzeuges (nicht gezeigt) für die Steuerung und Versorgung von Komponenten des Anhängefahrzeuges 14, insbesondere des Bremssystems 10 und der Beleuchtungsanlage vorgesehen.

Die elektrischen Anschlüsse 2, 3 und pneumatischen Anschlüsse 4, 5 sind an einem Gehäuse 6 angeordnet. Das Gehäuse 6 ist hier ein Kunststoffgehäuse. Alternativ wäre beispielsweise auch ein Metallgehäuse, insbesondere aus Blech, möglich. Die elektrischen Anschlüsse 2, 3 werden von den Gehäuse 6 teilweise ausgebildet, in diesem Fall dadurch, dass ein Steckdosengehäuse der als Steckdosen ausgebildeten elektrischen Anschlüsse 2, 3 an dem Gehäuse 6 angespritzt ist. Für die Befestigung der pneumatischen Anschlüsse 4, 5 sind an dem Gehäuse 6 Gewindezapfen angeformt, auf die die pneumatischen Anschlüsse 4, 5, welche mit hierzu komplementären Gewindebohrungen versehen sind, aufgeschraubt sind. Ja nach der Art der Anschlüsse, die an dem Gehäuse 6 angeordnet werden sollen, kann das Gehäuse 6 auch andere Befestigungsmittel aufweisen, beispielsweise Bohrungen oder Klipse. Wie bei den Steckdosen 2, 3 können auch bei den Kupplungsköpfen 4, 5 Komponenten zumindest teilweise durch das Gehäuse 6 ausgebildet werden.

Das Gehäuse 6 ist kastenförmig ausgebildet. Die elektrischen und pneumatischen Anschlüsse 2, 3, 4, 5 sind auf einer zugfahrzeugseitigen Vorderseite 7 des Gehäuses 6 angeordnet bzw. an der zugfahrzeugseitigen Vorderseite 7 des Gehäuses 6 zumindest teilweise ausgebildet. Des Weiteren weist das Gehäuse 6 eine Durchführung 8 auf. Die Durchführung 8 ist an einer den Anschlüssen 2, 3, 4, 5 gegenüberliegenden Rückseite 12 des Gehäuses ausgebildet. Durch die Durchführung 8 werden elektrische Leitungen 9 und pneumatische Leitungen 10, die mit den Anschlüssen 2, 3, 4, 5 im Inneren des Gehäuses 6 verbunden sind, aus dem Gehäuse 6 herausgeführt für die Verbindung mit Komponenten des Anhängefahrzeuges 14, hier des Bremssystems 10 und der Beleuchtungsanlage, siehe Fig. 1. Die Leitungen 9, 10 können beispielsweise durch Kabel, Rohre oder Schläuche ausgebildet sein. Die Durchführung 8 ist durch einen Gehäusedeckel 13 des Gehäuses 6 ausgebildet. Gehäusedeckel 13 und Durchführung 8 sind derart ausgebildet, dass der Innenraum des Gehäuses 6 nach außen abgedichtet ist, insbesondere gegen das Eintreten von Feuchtigkeit.

Das Gehäuse 6 weist auf seiner Rückseite mehrere Bohrungen 17 auf. Über die Bohrungen 17 ist die Anschlussanordnung 1 mittels Schraubverbindungen an einem Träger 18 des Anhängefahrzeuges an der zugfahrzeugseitigen Vorderseite des Anhängefahrzeuges 14 montiert. Der Träger 18 wird hier durch einen Metallträger eines Unterbaus des Anhängefahrzeuges gebildet. Alternativ kann die Anschlussanordnung 1 auch an einer Stirnwand des Anhängefahrzeugs angeordnet sein.

Das Anhängefahrzeug 14 ist als Auflieger für einen Sattelschlepper mit drei Radachsen 12 ausgebildet. Auch andere Anhängerarten sind möglich.

Die Fig. 3 zeigt eine zweite Ausführungsform einer erfindungsgemäßen Anschlussanordnung 1'. Die zweite Anschlussanordnung 1' ist in weiten Teilen entsprechend der ersten Anschlussanordnung 1 ausgebildet. Aufgrund dessen wird im Folgenden nur auf die Unterschiede zur ersten Anschlussanordnung 1 eingegangen.

Im Gegensatz zur ersten Anschlussanordnung 1 weist die zweite Anschlussanordnung 1' anstatt einer Durchführung 8 einen Ausgangsanschluss 11 auf, der im Gehäusedeckel 13 angeordnet ist. Der Anschlussausgang 11 ist hier als Steckdose 11 ausgebildet, was in der Fig. 3 symbolhaft angedeutet ist. Ein Steckdosengehäuse des Anschlusses 11 ist an dem Gehäusedeckel 13 angespritzt. Im Inneren des Gehäuses 6' sind mehrere elektrische und pneumatische Leitungen 9 bzw. 10 vorgesehen, die die elektrischen Anschlüsse 2, 3 und pneumatischen Anschlüsse 4, 5 mit dem Ausgangsanschluss 11 verbinden. Die Verbindung der Anschlussanordnung 1 mit anhängefahrzeugseitigen Komponenten, beispielsweise mit dem Bremssystem 10 oder en Lichtern 15, 16 der Beleuchtungsanlage, kann über anhängefahrzeugseitige Leitungen mit geeigneten komplementären Anschlussmitteln, in diesem Falle Steckern, erfolgen.

Die Verwendung eines Ausgangsanschlusses 11 bietet den Vorteil, dass es nicht notwendig ist, elektrische Leitungen 9 und pneumatische Leitungen 10 in ununterbrochener Form aus dem Gehäuse 6' herauszuführen. Anschlussanordnung 1' und anhängefahrzeugseitige Verkabelung sind auf diese Weise voneinander trennbar. Des Weiteren kann der Anschlussausgang 11 beliebig, insbesondere unabhängig von Normen ausgebildet werden. Insbesondere können einzelne Leitungen der Anschlüsse 2, 3, 4, 5, beispielsweise Stromversorgungsleitungen oder Leitungen für eine Signalübertragung, insbesondere Datenbus-Leitungen, auf dem Ausgangsanschluss 11 zusammengefasst werden, beispielsweise durch vorzugsweise im Gehäuse 6' angeordnete geeignete Adapter. Hierdurch lässt sich beispielsweise die anhängerfahrzeugseitige Verkabelung reduzieren.

Alternativ ist es insbesondere auch möglich, mehrere Durchführungen 8 oder mehrere Ausgangsanschlüsse 11 vorzusehen, oder Durchführungen 8 und Ausgangsanschlüsse 11 in einer Anschlussanordnung gemeinsam vorzusehen.

Fig. 4 zeigt eine dritte Ausführungsform einer erfindungsgemäßen Anschlussanordnung 1". Im Gegensatz zur ersten Anschlussanordnung 1 weist die dritte Anschlussanordnung 1" zwei weitere elektrische Anschlüsse 3', 3" auf. Entsprechend dem elektrischen Anschluss 3 sind die Anschlüsse 3', 3" als Steckdosen ausgebildet, wobei das Steckdosengehäuse an einem Gehäuse 6" der Anschlussanordnung 1" angespritzt ist. Die Anschlüsse 3', 3" sind Anschlüsse für eine Beleuchtungsanlage eines Anhängefahrzeuges, entsprechend dem elektrischen Anschluss 3. Die elektrischen Anschlüsse 3', 3" sind allerdings im Vergleich zum elektrischen Anschluss 3 mit anderen Normen ausgebildet und ermöglichen den Anschluss von zugfahrzeugseitigen Leitungen, die nur diese Normen aufweisen. Die von den Anschlüssen 3, 3', 3" abgehenden anhängefahrzeugseitigen elektrischen Leitungen können, insbesondere innerhalb des Gehäuses 6", vereinigt werden.

## Patentansprüche

1. Anschlussanordnung (1, 1', 1") für ein Anhängefahrzeug (14), umfassend folgende, für einen zugfahrzeugseitigen Anschluss geeignete Anschlüsse (2, 3, 4, 5): a) ein erster elektrischer Anschluss (2) für ein Bremssystem, b) ein zweiter elektrischer Anschluss (3) für eine Beleuchtungsanlage, c) ein erster pneumatischer Anschluss (4) für eine Bremsleitung, d) ein zweiter pneumatischer Anschluss (5) für eine Vorratsleitung, sowie ein Gehäuse (6, 6', 6"), wobei die Anschlüsse (2, 3, 4, 5) am Gehäuse (6, 6', 6") angeordnet sind und/oder von dem Gehäuse (6, 6', 6") zumindest teilweise ausgebildet werden, **dadurch gekennzeichnet, dass** das Gehäuse (6') einen Ausgangsanschluss (11) für den anhängefahrzeugseitigen Anschluss der Anschlussanordnung (1') aufweist, wobei im Inneren des Gehäuses (6) mehrere elektrische und pneumatische Leitungen (9, 10) vorgesehen sind, die die elektrischen Anschlüsse (2,3) und die pneumatischen Anschlüsse (4, 5) mit dem Ausgangsanschluss (11) verbinden.

2. Anordnung nach Anspruch 1, wobei die Anschlüsse (2, 3, 4, 5) gemeinsam auf einer zugfahrzeugseitigen Vorderseite (7) des Gehäuses (6, 6', 6") angeordnet sind und/oder an der zugfahrzeugseitigen Vorderseite (7) des Gehäuses (6, 6', 6") zumindest teilweise ausgebildet werden.

3. Anordnung nach einem der vorhergehenden Ansprüche, wobei das Gehäuse (6) eine oder mehrere Durchführungen (8) aufweist, zur Durchführung von elektrischen Leitungen (9) oder pneumatischen Leitungen (10).

4. Anordnung nach Anspruch 3, wobei durch eine Durchführung (8) eine oder mehrere pneumatische Leitungen (10) und/oder elektrische Leitungen (9) hindurchgeführt werden.

5. Anordnung nach einem der vorhergehenden Ansprüche, wobei die mindestens eine Durchführung (8) oder der mindestens eine Ausgangsanschluss (11) an einer den Anschlüssen (2, 3, 4, 5) gegenüberliegenden Rückseite (12) des Gehäuses (6, 6') angeordnet und/oder von dieser zumindest teilweise ausgebildet ist.

6. Anordnung nach einem der vorhergehenden Ansprüche, wobei die mindestens eine Durchführung (8) oder der mindestens eine Ausgangsanschluss (11) an einem Gehäusedeckel (13, 13') des Gehäuses (6, 6') angeordnet und/oder von diesem zumindest teilweise ausgebildet ist

7. Anhängefahrzeug (14), umfassend eine Anschlussanordnung (1) nach einem der vorhergehenden Ansprüche.

8. Anhängefahrzeug nach Anspruch 7, umfassend einen Träger (18), an dem die Anschlussanordnung (1) angeordnet ist.

## Claims

1. Connection arrangement (1, 1', 1") for a trailer vehicle (14), comprising the following connections (2, 3, 4, 5) which are suitable for a towing vehicle-end connection: a) a first electrical connection (2) for a brake system, b) a second electrical connection (3) for a lighting system, c) a first pneumatic connection (4) for a brake line, d) a second pneumatic connection (5) for a supply line, and a housing (6, 6', 6"), wherein the connections (2, 3, 4, 5) are arranged on the housing (6, 6', 6") and/or are at least partially formed by the housing (6, 6', 6"), **characterized in that** the housing (6') has an output connection (11) for the trailer vehicle-end connection of the connection arrangement (1'), wherein, in the interior of the housing (6), a plurality of electrical and pneumatic lines (9, 10) are provided, which lines connect the electrical connections (2, 3) and the pneumatic connections (4, 5) to the output connection (11).

2. Arrangement according to Claim 1, wherein the connections (2, 3, 4, 5) are jointly arranged on a towing vehicle-end front face (7) of the housing (6, 6', 6") and/or are at least partially formed on the towing vehicle-end front face (7) of the housing (6, 6', 6").

3. Arrangement according to either of the preceding claims, wherein the housing (6) has one or more leadthroughs (8) for routing electrical lines (9) or pneumatic lines (10).

4. Arrangement according to Claim 3, wherein one or more pneumatic lines (10) and/or electrical lines (9) are routed through one leadthrough (8).

5. Arrangement according to one of the preceding claims, wherein the at least one leadthrough (8) or the at least one output connection (11) is arranged on a rear face (12) of the housing (6, 6') which is situated opposite the connections (2, 3, 4, 5) and/or is at least partially formed by said rear face.

6. Arrangement according to one of the preceding claims, wherein the at least one leadthrough (8) or the at least one output connection (11) is arranged on a housing cover (13, 13') of the housing (6, 6') and/or is at least partially formed by said housing cover.

7. Trailer vehicle (14), comprising a connection arrangement (1) according to one of the preceding claims.

8. Trailer vehicle according to Claim 7, comprising a support (18) on which the connection arrangement (1) is arranged.

## Revendications

1. Agencement de raccordement (1, 1', 1") pour un véhicule tracté (14), comprenant les raccords (2, 3, 4, 5) suivants, appropriés pour un raccordement du côté du véhicule tracteur : a) un premier raccord électrique (2) pour un système de frein, b) un deuxième raccord électrique (3) pour une installation d'éclairage, c) un premier raccord pneumatique (4) pour une conduite de frein, d) un deuxième raccord pneumatique (5) pour une conduite de réserve, ainsi qu'un boîtier (6, 6', 6"), les raccords (2, 3, 4, 5) étant disposés au niveau du boîtier (6, 6', 6") et/ou étant réalisés au moins en partie par le boîtier (6, 6', 6"),
**caractérisé en ce que**
le boîtier (6') présente un raccord de sortie (11) pour le raccordement de l'agencement de raccordement (1') du côté du véhicule tracté, plusieurs conduites électriques et pneumatiques (9, 10) étant prévues à l'intérieur du boîtier (6), lesquelles relient les raccords électriques (2, 3) et les raccords pneumatiques (4, 5) au raccord de sortie (11).

2. Agencement selon la revendication 1, dans lequel les raccords (2, 3, 4, 5) sont disposés en commun sur un côté avant (7) du boîtier (6, 6', 6") du côté du véhicule tracteur, et/ou sont réalisés au moins en partie au niveau du côté avant (7) du boîtier (6, 6', 6") du côté du véhicule tracteur.

3. Agencement selon l'une quelconque des revendications précédentes, dans lequel le boîtier (6) présente un ou plusieurs passages (8) pour le passage de conduites électriques (9) ou de. conduites pneumatiques (10).

4. Agencement selon la revendication 3, dans lequel une ou plusieurs conduites pneumatiques (10) et/ou une ou plusieurs conduites électriques (9) sont guidées à travers un passage (8).

5. Agencement selon l'une quelconque des revendications précédentes, dans lequel l'au moins un passage (8) ou l'au moins un raccord de sortie (11) est disposé au niveau d'un côté arrière (12) du boîtier (6, 6') opposé aux raccords (2, 3, 4, 5) et/ou est réalisé au moins en partie par celui-ci.

6. Agencement selon l'une quelconque des revendications précédentes, dans lequel l'au moins un passage (8) ou l'au moins un raccord de sortie (11) est disposé au niveau d'un couvercle de boîtier (13, 13') du boîtier (6, 6') et/ou est réalisé au moins en partie par celui-ci.

7. Véhicule tracté (14), comprenant un agencement de raccordement (1) selon l'une quelconque des revendications précédentes.

8. Véhicule tracté selon la revendication 7, comprenant un support (18) sur lequel est disposé l'agencement de raccordement (1).
